(19) Europäisches Patentamt
European Patent Office
Office européen des brevets

(11) **EP 1 520 069 B1**

(12) **FASCICULE DE BREVET EUROPEEN**

(45) Date de publication et mention
de la délivrance du brevet:
**25.11.2009 Bulletin 2009/48**

(21) Numéro de dépôt: **03740305.2**

(22) Date de dépôt: **23.06.2003**

(51) Int Cl.:
***D07B 1/06*** *(2006.01)*

(86) Numéro de dépôt international:
**PCT/EP2003/006572**

(87) Numéro de publication internationale:
**WO 2004/003287 (08.01.2004 Gazette 2004/02)**

(54) **CÂBLES HYBRIDES COUCHES UTILISABLES POUR RENFORCER DES PNEUMATIQUES**

MEHRLAGIGE HYBRIDSEILE ZUR VERSTÄRKUNG VON LUFTREIFEN

HYBRID CABLES WITH LAYERS WHICH CAN BE USED TO REINFORCE TYRES

(84) Etats contractants désignés:
**AT BE BG CH CY CZ DE DK EE ES FI FR GB GR
HU IE IT LI LU MC NL PT RO SE SI SK TR**

(30) Priorité: **26.06.2002 FR 0207971**

(43) Date de publication de la demande:
**06.04.2005 Bulletin 2005/14**

(73) Titulaires:
• **Société de Technologie Michelin
63000 Clermont-Ferrand Cedex 09 (FR)**
• **Michelin Recherche et Technique S.A.
1763 Granges-Paccot (CH)**

(72) Inventeurs:
• **BARGUET, Henri
F-63430 Les Martres-d'Artiere (FR)**
• **VO, Le Tu Anh
FR-92140 Clamart (FR)**
• **POTTIER, Thibaud
F-63200 Malauzat (FR)**
• **DUCOURANT, Laurence
F-63100 Clermont-Ferrand (FR)**

(74) Mandataire: **Ribière, Joel
M.F.P. Michelin,
SGD/LG/PI - F35 - Ladoux
63040 Clermont-Ferrand Cedex 9 (FR)**

(56) Documents cités:
**EP-A- 1 033 435      US-A- 4 176 705
US-A- 6 007 912**

## Description

La présente invention concerne des câbles hybrides à couches dont certains sont utilisables pour renforcer au moins une nappe sommet de protection de pneumatiques poids-lourd ou génie civil, et d'autres pour renforcer des bourrelets de pneumatique pour véhicules légers à moteur, tels que des motocyclettes. L'invention concerne également un tissu composite utilisable comme nappe de sommet de protection de tels pneumatiques poids-lourd ou génie civil, une tringle destinée à renforcer ces bourrelets de pneumatique et les pneumatiques précités.

Les câbles d'acier pour pneumatiques sont en règle générale constitués de fils en acier perlitique (ou ferrito-perlitique) au carbone, désigné ci-après "acier au carbone", dont la teneur en carbone est généralement comprise entre 0,2 % et 1,2 %, le diamètre de ces fils étant le plus souvent compris entre environ 0,10 et 0,40 mm. On exige de ces fils une très haute résistance à la traction, en général supérieure à 2000 MPa, de préférence supérieure à 2500 MPa, obtenue grâce au durcissement structural intervenant lors de la phase d'écrouissage des fils. Ces fils sont ensuite assemblés sous forme de câbles ou torons, ce qui nécessite des aciers utilisés qu'ils aient aussi une ductilité en torsion suffisante pour supporter les diverses opérations de câblage.

De manière connue, les pneumatiques poids-lourd, génie civil et pour véhicules légers à moteur comportent usuellement une armature de carcasse qui est ancrée dans deux bourrelets et qui est surmontée radialement par une armature de sommet comportant une ou plusieurs nappes sommet de travail, cette armature de sommet étant elle-même surmontée d'une bande de roulement qui est réunie aux bourrelets par deux flancs. Pour des pneumatiques poids-lourd ou génie civil seulement, l'armature de sommet comporte en outre une ou plusieurs nappes sommet de protection surmontant la ou les nappes sommet de travail.

Ces nappes sommet de protection ont essentiellement pour fonction de faire obstacle, lors du roulage, à la pénétration de corps étrangers radialement à l'intérieur de celles-ci, corps étrangers qui affectent en particulier les pneumatiques génie civil du fait de leur évolution fréquente sur des sols à cailloux tranchants.

Pour le renforcement de l'armature de carcasse et de la nappe sommet de travail de pneumatiques radiaux, tels que des pneumatiques poids-lourd, on utilise usuellement des câbles d'acier dits "à couches" (*"layered cords"* en anglais) ou "multicouches" constitués d'une âme centrale et d'une ou plusieurs couches de fils concentriques disposées autour de cette âme, pour que la rigidité du câble soit pratiquement égale à la somme des rigidités des fils le constituant. Parmi les câbles à couches, on distingue notamment, de manière connue, les câbles à structure compacte et les câbles à couches tubulaires ou cylindriques.

De tels câbles à couches ont été décrits dans un très grand nombre de publications. On pourra se reporter notamment aux documents GB-A-2 080 845; US-A-3 922 841; US-A-4 158 946; US-A-4 488 587; EP-A-168 858; EP-A-176 139 ou US-A-4 651 513; EP-A-194 011; EP-A-260 556 ou US-A-4 756 151; US-A-4 781 016; EP-A-362 570; EP-A-497 612 ou US-A-5 285 836; EP-A-567 334 ou US-A-5 661 965; EP-A-568 271; EP-A-648 891; EP-A-661 402 ou US-A-5 561 974; EP-A-669 421 ou US-A-5 595 057; EP-A-675 223; EP-A-709 236 ou US-A-5 836 145; EP-A-719 889 ou US-A-5 697 204; EP-A-744 490 ou US-A-5 806 296; EP-A-779 390 ou US-A-5 802 829; EP-A-834 613 ou US-A-6 102 095; WO-A-98/41682; RD (*Research Disclosure*) N°316107, août 1990, p. 681; RD N°34054, août 1992, pp. 624-33; RD N°34370, novembre 1992, pp. 857-59; RD N°34779, mars 1993, pp. 213-214; RD N°34984, mai 1993, pp. 333-344; RD N°36329, juillet 1994, pp. 359-365.

Les câbles à couches les plus répandus dans les armatures de carcasse et dans la nappe sommet de travail des pneumatiques radiaux sont essentiellement des câbles de formule [M+N] ou [M+N+P], ces derniers étant généralement destinés aux plus gros pneumatiques. Ces câbles sont formés de manière connue d'une âme de M fil(s) entourée d'au moins une couche de N fils éventuellement elle-même entourée d'une couche externe de P fils, avec en général M variant de 1 à 4, N variant de 3 à 12, P variant de 8 à 20 le cas échéant, l'ensemble pouvant être éventuellement fretté par un fil de frette externe enroulé en hélice autour de la dernière couche.

Le document de brevet américain US-A-4 176 705 divulgue un câble hybride à couches qui est en particulier destiné à renforcer l'armature de carcasse d'un pneumatique poids-lourd ou génie civil. La couche interne de ce câble est constituée d'une âme multifilamentaire en un matériau non métallique de résistance à la traction équivalente à celle de l'acier, et la couche externe de ce câble, insaturée, est par exemple constituée de 6 torons métalliques comportant chacun 4 fils retordus dans une direction opposée à celle desdits torons, suivant une construction S-Z.

Le matériau non métallique constituant cette âme multifilamentaire, de préférence l'aramide, est choisi spécifiquement pour procurer au câble une rigidité proche de la somme des rigidités de ses constituants et pour ne pas réduire la résistance globale à la traction du câble, à la différence de matériaux tels que des polyesters aliphatiques qui ont une résistance à la rupture très inférieure à celle de l'acier. Cette âme en aramide est en outre prévue pour remplir les interstices entre les torons pour minimiser la corrosion du câble par infiltration d'eau et, à cet effet, le diamètre de cette âme est choisi égal ou supérieur à celui de chaque toron métallique.

Quant à EP-A-1 033 435 et US-A-6 007 912, cités comme US-A-4 176 705 dans le rapport de recherche européen, ils concernent des câbles d'acier hybrides (composites) très différents de ceux de la présente invention, à usage différent. Ces câbles possèdent en particulier une couche externe saturée et un allongement à la rupture total (At) qui est très nettement inférieur à celui (supérieur à 7%) atteint par les câbles de la présente invention. EP-A-1 033 435 décrit par exemple en page 5 (tableau 2) des câbles composites dont les valeurs d'allongement à la rupture At sont inférieurs à 3%. US-A-6 007 912 décrit quant à lui des câbles dont la structure compacte et la couche externe saturée sont clairement incompatibles, de manière évidente pour tout homme du métier, avec des allongements à la rupture aussi élevés que ceux des câbles de la présente invention.

Pour le renforcement des nappes sommet de protection des pneumatiques poids-lourd ou génie civil, on utilise généralement aujourd'hui des câbles non pas à couches mais à torons *("strand cords" en anglais)* qui sont assemblés par la technique connue de toronnage et qui sont constitués par définition d'une pluralité de torons métalliques enroulés ensemble en hélice, chaque toron comportant une pluralité de fils d'acier également enroulés ensemble en hélice.

On notera que la majorité des fils utilisés dans ces câbles pour nappe sommet de protection présentent un diamètre qui est typiquement supérieur à 0,20 mm, par exemple proche de 0,25 mm, diamètre plus élevé en particulier que celui des fils utilisés dans les câbles pour armature de carcasse de ces pneumatiques. Ces câbles pour nappe sommet de protection sont destinés, d'une part, à conférer une souplesse optimale à la nappe les incorporant pour que cette nappe sommet de protection puisse « épouser » au mieux la forme de l'obstacle sur lequel elle appuie lors du roulage, et, d'autre part, à permettre à cette nappe de s'opposer à la pénétration de corps étrangers radialement à l'intérieur de celle-ci.

On notera également que ces câbles à torons doivent être imprégnés autant que possible par le caoutchouc, de sorte que ce dernier pénètre dans tous les espaces entre les fils constituant les câbles. En effet, si cette pénétration est insuffisante, il se forme alors des canaux vides le long des câbles, et les agents corrosifs, par exemple l'eau, susceptibles de pénétrer dans les pneumatiques par exemple à la suite de coupures ou d'autres agressions de l'armature de sommet du pneumatique, cheminent le long de ces canaux à travers ladite armature. La présence de cette humidité joue un rôle important en provoquant de la corrosion et en accélérant les processus de fatigue (phénomènes dits de "fatigue-corrosion"), par rapport à une utilisation en atmosphère sèche.

Pour le renforcement spécifique des nappes sommet de protection de pneumatiques génie civil, la demanderesse utilise actuellement des câbles à torons de formule 4 x 6 (i.e. constitués de 4 torons de 6 fils d'acier chacun) dans les pneumatiques génie civil de dimensions « 40.00 R57 XDR » qu'elle commercialise, chaque fil de toron présentant par exemple un diamètre de 0,26 mm. L'expérience a montré que ces câbles sont tout à fait satisfaisants dans cette fonction de renforcement, du fait qu'ils retardent notamment dans le temps l'apparition et la propagation de perforations ou entailles entre la bande de roulement et ces nappes sommet de protection.

Le but de la présente invention est de proposer un nouveau câble

Les câbles à couches selon l'invention peuvent être utilisés avantageusement en remplacement des câbles précités assemblés par toronnage qui sont couramment utilisés à ce jour pour renforcer ces nappes sommet de protection, du fait qu'ils présentent un allongement relatif à la rupture At (i.e. un allongement total At, somme des allongements structural As, élastique Ae et plastique Ap) très supérieur à celui des câbles connus.

A titre indicatif, le câble à torons précité de formule 4 x 6 présente un allongement relatif à la rupture At, mesuré en traction selon la norme ISO 6892 de 1984, qui est égal à 5,4 % (égal à la somme desdits allongements relatifs As, Ae et Ap qui sont respectivement égaux à 1,9 %, 2,3 % et 1,2 %).

Cette valeur élevée de l'allongement relatif à la rupture At des câbles selon l'invention et la souplesse accrue desdits câbles en résultant permet de réduire, lors de sollicitations sévères, la tension des nappes sommet de protection qui sont renforcées par ces câbles, ce qui a en particulier pour effet de réduire la sensibilité de ces nappes à la propagation des entailles et notamment aux dégâts dus à la corrosion.

On notera que cette valeur élevée de At est obtenue par l'utilisation dans ladite couche interne d'un matériau de rigidité très inférieure à celle de l'acier utilisé pour les torons, tel qu'un matériau textile par exemple constitué d'un polyamide aliphatique, d'un polyester aliphatique ou de rayonne (à la différence de l'aramide par exemple, qui n'est pas utilisable dans la présente invention du fait de son allongement relatif à la rupture Ar à 20° C d'environ 3 %, proche de celui de l'acier écroui qui est d'environ 1,8%).

De préférence, on utilise pour constituer la couche interne au moins un matériau textile ayant un allongement relatif à la rupture Ar à 20° C qui est supérieur à 10 %.

On notera également que la couche interne des câbles selon l'invention permet essentiellement de conférer à la nappe sommet de protection renforcée par ces câbles, d'une part, un caractère élastique lors de la fabrication du pneumatique et, d'autre part, une rigidité réduite lorsqu'elle est sollicitée en roulage.

La couche externe des câbles selon l'invention est une couche tubulaire de N torons qui est dite "insaturée" ou "incomplète", c'est-à-dire que, par définition, il existe suffisamment de place dans cette couche tubulaire pour y ajouter au moins un (N+1)ème toron de même diamètre que les précédents, plusieurs des N torons se trouvant éventuellement au contact les uns des autres. Réciproquement, cette couche tubulaire serait qualifiée de "saturée" ou de "complète" s'il n'existait pas suffisamment de place dans cette couche pour y ajouter au moins un (N+1)ème toron de même diamètre.

On notera en outre que cette couche externe insaturée favorise la pénétration du caoutchouc autour de ladite couche interne (i.e. entre les torons), ce qui contribue à minimiser encore les dégâts dus à la corrosion.

Avantageusement, des câbles hybrides à couches selon l'invention peuvent présenter un allongement relatif à la rupture At, toujours mesuré en traction selon la norme ISO 6892 de 1984, qui est égal ou supérieur à 10 % et, à titre encore plus avantageux, qui est égal ou supérieur à 12 %.

Ladite couche interne formant l'âme d'un câble selon l'invention peut être constituée d'un fil unique, ou de plusieurs fils tordus ensemble pour former un retors (usuellement désigné sous le nom de « *cord* » ou « *plied yarn* » en anglais), étant entendu que dans la présente description le terme « fil » peut désigner aussi bien :

- une fibre multifilamentaire constituée de filaments élémentaires de faible diamètre parallèles entre eux,
- un filé à base d'une multitude de tels filaments élémentaires qui sont tordus ensemble (ce filé, parfois appelé « surtors » par l'homme du métier, peut être par exemple à base d'une centaine de filaments élémentaires présentant chacun un diamètre voisin d'une dizaine de microns), ou
- un monofilament unique.

Par monofilament, on entend ici de manière connue un filament unitaire dont le diamètre ou l'épaisseur D (i.e. la plus petite dimension transversale de sa section droite lorsque celle-ci n'est pas circulaire) est supérieur à 100 $\mu$m. Cette définition couvre donc aussi bien des monofilaments de forme essentiellement cylindrique (i.e. à section circulaire) que des monofilaments oblongs, de forme aplatie, ou encore des bandelettes ou films d'épaisseur D.

Dans la présente description, le titre de chaque élément non métallique, tel que ladite couche interne ou âme, est déterminé sur au moins trois échantillons, chacun correspondant à une longueur de 50 m, par pesée de cette longueur d'élément non métallique. Le titre est donné en tex (poids en g de 1000 m d'élément non métallique - rappel: 0,111 tex égal à 1 denier), après un conditionnement préalable consistant en un stockage de chaque élément non métallique (après séchage) pendant au moins 24 heures, dans une atmosphère standard selon la norme européenne DIN EN 20139 (température de 20 $\pm$ 2° C ; hygrométrie de 65 $\pm$ 2 %).

Les propriétés mécaniques en extension (ténacité, module initial, allongement relatif à la rupture Ar) de chaque élément non métallique sont mesurées de manière connue à l'aide d'une machine de traction « ZWICK GmbH & Co » (Allemagne) de type 1435 ou 1445. Chaque élément non métallique subit une traction sur une longueur initiale de 400 mm à une vitesse nominale de 50 mm/min. Tous les résultats donnés dans la suite de la présente description sont une moyenne de .10 mesures, réalisées après le conditionnement préalable susmentionné.

La ténacité (force-rupture divisée par le titre) et le module initial sont indiqués en cN/tex (rappel: 1 cN/tex = 0,11 g/den). Le module initial est défini comme la pente de la partie linéaire de la courbe force-allongement, qui intervient juste après une prétension standard de 0,5 cN/tex. L'allongement relatif à la rupture est indiqué en pourcentage.

Le diamètre D des monofilaments est déterminé par le calcul à partir du titre des monofilaments et de leur masse volumique, selon la formule :

$$D = 2.10^{1,5} \ [Ti \ / \ \pi\rho]^{0,5}$$

avec D en $\mu$m, Ti étant le titre (tex), et p étant la masse volumique en g/cm$^3$.

Dans le cas d'un monofilament à section transversale non circulaire, c'est-à-dire autre qu'un monofilament de forme essentiellement cylindrique, le paramètre D, qui représente alors la plus petite dimension du monofilament dans un plan normal à l'axe de ce dernier, est déterminé non plus par le calcul mais expérimentalement, par microscopie optique sur une coupe transversale de ce monofilament, ce dernier étant par exemple préalablement enrobé dans une résine pour faciliter la coupe.

Selon un exemple de réalisation de l'invention, ladite couche interne formant l'âme d'un câble selon l'invention est constituée d'un polyamide aliphatique, de préférence un polyamide 6,6.

Selon un autre exemple de réalisation de l'invention, cette couche interne est constituée d'un polyester aliphatique, de préférence un polyéthylène téréphtalate (PET) ou un polyéthylène naphtalate (PEN).

Selon un autre exemple de réalisation de l'invention, cette couche interne est constituée de rayonne. Selon un autre exemple de réalisation de l'invention, cette couche interne est constituée d'alcool polyvinylique (PVA).

Selon un mode de réalisation de l'invention, ladite couche interne formant âme est constituée d'un monofilament.

Selon un autre mode préférentiel de réalisation de l'invention, cette couche interne est multifilamentaire, pouvant être constituée au choix d'un ou plusieurs filé(s) chacun à base d'une multitude de filaments élémentaires, ou d'un ou plusieurs surtors qui sont chacun obtenus par assemblage de plusieurs filés, ou d'un ou plusieurs retors qui sont chacun constitués de plusieurs surtors tordus ensemble, ou d'un câblé textile.

On notera que cette âme multifilamentaire présente l'avantage de demeurer axialement en retrait de la couche externe du câble selon l'invention, ce qui facilite les opérations de soudage entre deux extrémités de câbles ainsi que la confection des nappes de câbles « droit fil ». De plus, le coût de cette âme multifilamentaire est réduit.

Selon une autre caractéristique de l'invention, chacun des torons de ladite couche externe, dont le nombre varie de 3 à 12, comporte au moins 3 fils qui sont tous métalliques ou pas et qui sont enroulés en hélice selon un pas égal ou inférieur au pas d'enroulement desdits torons sur ladite couche interne.

Lesdits fils métalliques que comportent les torons sont par exemple constitués d'acier dont la teneur en carbone varie de 0,2 à 1,2 % et, de préférence, cette teneur est comprise entre 0,5 et 1,0 %.

De préférence, un câble selon l'invention, qui comporte ladite couche interne de diamètre $d_i$, $d_i$' sur laquelle sont enroulés en hélice selon un pas $p_i$, $p_i$' lesdits torons au nombre de N ou N', est tel que chaque toron comporte au choix :

(a) soit n fils métalliques de diamètre $d_e$ qui sont enroulés ensemble en hélice selon un pas $p_e$ ou bien qui comprennent n-1 fils enroulés sur un fil d'âme pour le toron selon un pas $p_e$', ledit câble vérifiant alors l'ensemble des conditions suivantes :

(ai) ladite couche interne est constituée d'au moins un matériau présentant un allongement relatif à la rupture Ar à 20° C qui est supérieur à 6 % ;
(aii) $0,17 \leq d_e$ (en mm) $\leq 0,36$ ;
(aiii) $1,1. d_e \leq d_i$ (en mm) $\leq 5. d_e$ ;
(aiv) $3 \leq N \leq 12$ ;
(av) $3 \leq n \leq 6$ ;
(avi) $5. d_i \leq p_e$ (en mm) $\leq 20. d_i$ ou $5. d_i \leq p_e$' (en mm) $\leq 20. d_i$ ;
(avii) $p_e \leq p_i$ (en mm) $\leq 3. p_e$ ou $p_e$' $\leq p_i$ (en mm) $\leq 3. p_e$' ;

(b) soit m fils métalliques de diamètre de' enroulés en hélice selon un pas $p_e$" sur un fil d'âme non métallique de diamètre $d_{fa}$, ledit câble vérifiant alors l'ensemble des conditions suivantes :

(bi) ladite couche interne et ledit fil d'âme sont constitués de matériaux identiques ou différents présentant chacun un allongement relatif à la rupture Ar à 20° C qui est supérieur à 6 % ;
(bii) $0,17 \leq d_e$' (en mm) $\leq 0,36$ ;
(biii) $1,1. d_e$' $\leq d_{fa}$ (en m) $\leq 3. d_e$' ;
(biv) $1,1. (d_{fa} + 2. d_e$') $\leq d_i$' $\leq 3. (d_{fa} + 2. d_e$') ;
(bv) $3 \leq N$' $\leq 12$ ;
(bvi) $5 \leq m \leq 12$ ;
(bvii) $10. d_i$' $\leq p_e$" (en mm) $\leq 20. d_i$' ;
(bviii) $p_e$" $\leq p_i$' (en mm) $\leq 3. p_e$".

De préférence, un câble selon l'invention est tel que lesdits fils de chaque toron, d'une part, et lesdits torons, d'autre part, sont enroulés dans le même sens de torsion (sens S/S ou Z/Z).

Dans le cas (a) précité, dans lequel chaque toron est entièrement métallique, un câble selon l'invention vérifie de préférence la relation :

(aiii) $1,5. p_e \leq p_i$ (en mm) $\leq 2. p_e$ ou $1;5. p_e$' $\leq p_i$ (en mm) $\leq 2. p_e$'.

Egalement dans ce cas (a), un câble selon l'invention vérifie, à titre encore plus préférentiel, la relation :

(aix) $4 \leq p_e \leq p_i$ (en mm) $\leq 12$ ou $4 \leq p_e$' $\leq p_i$ (en mm) $\leq 12$ ;

Selon un premier exemple de réalisation de ce cas (a), un câble selon l'invention comporte N = 4 torons métalliques constitués chacun de n = 6 fils métalliques, lesquels comprennent un fil d'âme métallique sur lequel sont enroulés en hélice 5 autres fils métalliques. Ce câble répond ainsi à la formule 1 + 4 x (1+5). A titre non limitatif, la couche interne de ce câble peut être avantageusement constituée d'un monofilament de polyamide aliphatique, de polyester aliphatique, de PVA ou de rayonne, ce monofilament présentant un diamètre compris entre 0,6 mm et 0,8 mm.

Selon un second exemple de réalisation de ce cas (a), un câble selon l'invention comporte N = 5 torons métalliques constitués chacun de n = 6 fils métalliques, lesquels comprennent un fil d'âme métallique sur lequel sont enroulés en hélice 5 autres fils métalliques. Ce câble répond ainsi à la formule 1 + 5 x (1+5). A titre non limitatif, la couche interne de ce câble peut être constituée d'un monofilament de polyamide aliphatique, de polyester aliphatique, de PVA ou de rayonne, ce monofilament présentant un diamètre compris entre 0,9 mm et 1,1 mm.

Selon un troisième exemple de réalisation de ce cas (a), un câble selon l'invention comporte N = 7 torons métalliques constitués chacun de n = 3 fils métalliques, lesquels sont enroulés ensemble en hélice. Ce câble répond ainsi à la formule 1 + 7 x 3. A titre non limitatif, la couche interne de ce câble peut être constituée d'un monofilament de polyamide aliphatique, de polyester aliphatique, de PVA ou de rayonne, ce monofilament présentant un diamètre compris entre 0,7 et 0,9 mm.

Dans le cas (b) précité, dans lequel chaque toron est seulement en partie métallique, un câble selon l'invention vérifie de préférence la relation :

$$1{,}5\ p_e'' \leq p_i' \ (\text{en mm}) \leq 2.p_e''.$$

Egalement dans ce cas (b), un câble selon l'invention vérifie, à titre encore plus

$$4 \leq p_e'' \leq p_i' \ (\text{en mm}) \leq 12.$$

Selon un exemple de réalisation de ce cas (b), un câble selon l'invention comporte N = 3 torons constitués chacun de 7 fils, lesquels comprennent un fil d'âme non métallique sur lequel sont enroulés en hélice m = 6 fils métalliques. Ce câble répond ainsi à la formule 1 + 3 x (1+6). A titre d'exemple, la couche interne de ce câble et ledit fil d'âme peuvent être avantageusement constitués d'un monofilament de polyamide aliphatique, de polyester aliphatique, de PVA ou de rayonne.

Les câbles hybrides à couches selon l'invention sont assemblés par un procédé de retordage qui consiste essentiellement :

- à enrouler en hélice sur ladite couche interne les torons de ladite couche externe selon un pas transitoire de retordage donné,
- à réaliser un surtordage destiné à réduire ce pas transitoire, i.e. destiné à augmenter l'angle d'hélice de ladite couche externe et, par conséquent, la courbure d'hélice de cette dernière, et
- à stabiliser par détorsion le câble obtenu pour l'obtention d'un couple résiduel nul.

On notera que les câbles hybrides à couches selon l'invention présentent un diamètre total qui est de préférence supérieur à 2 mm pour leur utilisation dans les nappes sommet de protection et, à titre encore plus préférentiel, ce diamètre de câble peut varier de 2,2 mm à 4 mm.

Le procédé de retordage précité qui est mis en oeuvre pour l'obtention d'un câble selon l'invention confère à la couche externe à torons dudit câble une courbure excessive qui l'écarte de la couche interne. Cette courbure est définie, d'une part, par le diamètre d'hélice de cette couche externe et, d'autre part, par le pas d'hélice ou bien par l'angle d'hélice de ladite couche externe (angle mesuré à partir de l'axe du câble).

On notera que la couche interne des câbles selon l'invention permet d'augmenter à la fois le diamètre d'hélice et l'angle d'hélice.

Selon l'invention, cet angle d'hélice est relativement élevé, étant compris entre 25° et 45°.

Le caractère élastique de ladite couche interne permet de conserver dans le câble finalement obtenu une partie de la tension initiale qui lui est appliquée, du fait du procédé précité, pour mettre en compression ladite couche externe, ce qui contribue à élever d'une manière significative l'allongement structural As du câble (lequel est proportionnel à $tg^2$ (angle d'hélice)). On notera également que cet allongement As est encore accru du fait que ladite couche externe est constituée de torons.

Un tissu composite selon l'invention est utilisable comme nappe sommet de protection d'une enveloppe de pneumatique poids-lourd ou génie civil, et il comporte une composition de caoutchouc à base d'au moins un élastomère diénique qui est renforcée par des éléments de renforcement constitués desdits câbles selon l'invention.

Cette composition de caoutchouc est à base (i.e. formée) d'au moins un élastomère diénique et elle comporte, outre cet élastomère diénique, tous les ingrédients habituels tels que charge renforçante, système de réticulation et autres additifs utilisables dans les compositions de caoutchouc pour pneumatiques.

Par élastomère "diénique", on entend de manière connue un élastomère issu au moins en partie (i.e. un homopolymère ou un copolymère) de monomères diènes c'est-à-dire porteurs de deux doubles liaisons carbone-carbone, conjuguées ou non.

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, l'élastomère diénique du composite conforme à l'invention est préférentiellement choisi dans le groupe constitué par les polybutadiènes, le caoutchouc naturel, les polyisoprènes de synthèse, les différents copolymères de butadiène, les différents copolymères d'isoprène, et les mélanges de ces élastomères.

Parmi les polybutadiènes, conviennent en particulier ceux ayant une teneur en unités -1,2 comprise entre 4 % et 80 % ou ceux ayant une teneur en cis-1,4 supérieure à 80 %. Parmi les polyisoprènes de synthèse, conviennent en particulier les cis-1,4-polyisoprènes, de préférence ceux ayant un taux de liaisons cis-1,4 supérieur à 90 %. Parmi les copolymères de butadiène ou d'isoprène, on entend en particulier les copolymères obtenus par copolymérisation d'au moins l'un de ces deux monomères avec un ou plusieurs composés vinyle-aromatique ayant de 8 à 20 atomes de carbone. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène. Les copolymères peuvent contenir entre 99 % et 20 % en poids d'unités diéniques et entre 1 % et 80 % en poids d'unités vinyle-aromatiques. Parmi les copolymères de butadiène ou d'isoprène ci-dessus, on citera préférentiellement les copolymères de butadiène-styrène, les copolymères d'isoprène-butadiène, les copolymères d'isoprène-styrène ou les copolymères d'isoprène-butadiène-styrène.

En résumé, convient de préférence un élastomère diénique choisi dans le groupe des élastomères diéniques fortement insaturés constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères.

A titre encore plus préférentiel, convient à titre majoritaire (i.e., à plus de 50 % en poids) dans la matrice élastomère de la composition de caoutchouc selon l'invention un élastomère diénique constitué de caoutchouc naturel ou d'un polyisoprène de synthèse et, à titre encore plus préférentiel, constitué de caoutchouc naturel.

Mais on peut aussi utiliser, selon un autre mode de réalisation avantageux de l'invention, des coupages de ces polyisoprènes avec d'autres élastomères diéniques fortement insaturés, notamment avec des élastomères SBR ou BR tels que précités.

Bien entendu, les matrices de caoutchouc des tissus composites de l'invention peuvent contenir un ou plusieurs élastomères diéniques, ce(s) dernier(s) pouvant être utilisé(s) en association avec tout type d'élastomère synthétique non diénique, voire avec des polymères autres que des élastomères, par exemple des polymères thermoplastiques.

Les compositions de caoutchouc des tissus composites conformes à l'invention comportent également tout ou partie des additifs habituellement utilisés dans la fabrication de pneumatiques, tels que des charges renforçantes comme le noir de carbone et/ou une charge inorganique renforçante telle que la silice, des agents anti-vieillissement, par exemple des antioxydants, des huiles d'extension, des plastifiants ou des agents facilitant la mise en oeuvre des compositions à l'état cru, un système de réticulation à base soit de soufre, soit de donneurs de soufre et/ou de peroxyde, des accélérateurs, des activateurs ou retardateurs de vulcanisation, des accepteurs et donneurs de méthylène, des résines, des systèmes promoteurs d'adhésion connus du type "RFS" (résorcinol-formaldéhyde-silice) ou sels métalliques, notamment sels de cobalt.

Le tissu composite selon l'invention peut se présenter sous des formes variées, par exemple sous la forme d'une nappe, d'une bande, bandelette ou d'un bloc de caoutchouc dans lequel est incorporé le renfort métallique à l'aide de différents moyens connus de l'homme du métier, tels que par exemple des moyens de moulage, de calandrage ou de boudinage.

Selon une autre caractéristique du tissu composite selon l'invention, ladite composition de caoutchouc présente, à l'état réticulé et mesuré selon la norme ASTM D 412, un module sécant M10 compris entre 5 et 12 MPa et, de préférence, ce module M 10 est compris entre 6 et 11 MPa.

Les câbles selon l'invention sont disposés parallèlement entre eux dans le tissu composite, d'une part, selon une densité (notée « d ») de câbles par dm de tissu et, d'autre part, selon une largeur de « pont » de caoutchouc entre deux câbles adjacents (cette largeur ci-après notée « ΔL », exprimée en mm, représente de manière connue la différence entre le pas de calandrage ou pas de pose du câble dans le tissu et le diamètre dudit câble), d et ΔL étant spécifiquement fixées compte tenu du renforcement spécifique recherché dans la présente invention, i.e. pour le renforcement d'une nappe sommet de protection d'un pneumatique poids-lourd ou génie civil.

Dans le cas d'un tissu composite selon l'invention constituant une nappe sommet de protection d'un pneumatique génie civil, la distance entre deux câbles adjacents, d'axe en axe, est par exemple comprise entre 3 et 4 mm. En dessous de la valeur minimale indiquée, le pont de caoutchouc, trop étroit, risque de se dégrader mécaniquement lors du travail de la nappe, notamment au cours des déformations subies dans son propre plan par extension ou cisaillement. Au-delà du maximum indiqué, on s'expose à des risques de perforation entre les câbles.

On notera que le tissu composite selon l'invention est tel que sa densité d de câbles est de préférence comprise entre 20 et 40 câbles par dm de tissu.

Selon une autre caractéristique du tissu composite selon l'invention, la largeur ΔL du pont de composition de caoutchouc entre deux câbles adjacents est comprise entre 0,5 et 1,3 mm et, de préférence, cette largeur ΔL est comprise entre 0,6 et 0,9 mm.

Une tringle selon l'invention est destinée à renforcer un bourrelet d'enveloppe de pneumatique pour véhicule léger à moteur, tel qu'une motocyclette, et elle comporte un câble hybride à couches selon ledit troisième exemple de réalisation selon l'invention du cas (a) précité, ce câble comportant N = 7 torons métalliques constitués chacun de n = 3 fils métalliques, lesquels sont enroulés ensemble en hélice.

Une enveloppe de pneumatique poids-lourd ou génie civil selon l'invention, comportant de manière connue une armature de carcasse qui est ancrée dans deux bourrelets et qui est surmontée radialement par une armature de sommet comportant, d'une part, une ou plusieurs nappes sommet de travail et, d'autre part, une ou plusieurs nappes sommet de protection surmontant ladite ou lesdites nappes sommet de travail, ladite armature de sommet étant elle-même surmontée d'une bande de roulement qui est réunie auxdits bourrelets par deux flancs, est telle que l'une au moins desdites nappes sommet de protection comporte ledit tissu composite selon l'invention.

Selon un autre aspect de l'invention, une enveloppe de pneumatique pour véhicule léger à moteur, tel qu'une motocyclette, qui comporte une armature de carcasse ancrée dans deux bourrelets, est telle que chacun desdits bourrelets est renforcé par ladite tringle selon l'invention.

Les caractéristiques précitées de la présente invention, ainsi que d'autres, seront mieux comprises à la lecture de la description suivante de plusieurs exemples de réalisation de l'invention, donnés à titre illustratif et non limitatif, ladite description étant réalisée en référence avec les dessins joints, parmi lesquels :

La Fig. 1 est une vue en coupe transversale d'un câble hybride à couches selon un premier mode de réalisation de l'invention dans lequel les torons de la couche externe sont entièrement métalliques,

La Fig. 2 est une vue en coupe transversale d'un câble hybride à couches selon un second mode de réalisation de l'invention dans lequel les torons de la couche externe sont seulement en partie métalliques, et

La Fig. 3 est un graphique effort (daN) - déformation (%) illustrant notamment les caractéristiques de résistance à la rupture et d'allongement relatif à la rupture d'un câble « témoin » à torons et de deux câbles hybrides à couches selon l'invention, pour ces câbles pris isolément avant leur incorporation au tissu composite correspondant.

## Exemples de câbles selon l'invention en comparaison d'un câble « témoin »:

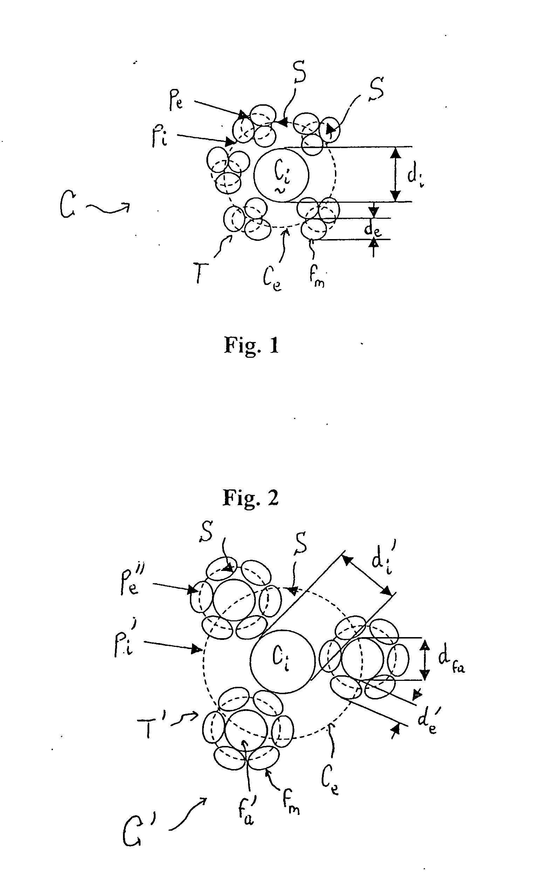

La Fig. 1 illustre un premier mode de réalisation d'un câble hybride à couches C selon l'invention, en référence au cas (a) susmentionné dans lequel ladite couche externe est entièrement métallique.

Ce câble C comporte une couche interne $C_i$ non métallique formant âme et une couche externe $C_e$ insaturée comportant des torons T au nombre de N (seulement 5 torons ont été représentés pour des raisons de clarté) qui sont chacun entièrement métalliques et qui sont enroulés en hélice selon un pas $p_i$ sur la couche interne $C_i$, de diamètre $d_i$.

On voit à la Fig. 1 que chaque toron T comporte n fils métalliques $f_m$ de diamètre $d_e$ qui sont enroulés ensemble en hélice selon un pas $p_e$. Selon l'invention, la couche interne $C_i$ est constituée dudit matériau présentant un allongement relatif à la rupture à 20° C supérieur à 6%.

Le câble C de la Fig. 1 est donc conforme audit troisième exemple de réalisation du cas (a) précité correspondant à la formule 1 + 7 x 3. Selon ce troisième exemple, le câble C comporte, d'une part, une couche interne $C_i$ constituée d'un monofilament de polyéthylène téréphtalate de type « regular » de diamètre $d_i$ égal à 0,8 mm et, d'autre part, N = 7 torons constitués chacun de n = 3 fils d'acier de diamètre égal à 0,23 mm. De plus, les pas $p_e$ et $p_i$ de ce câble C sont respectivement égaux à 5,5 et 10 mm dans les sens d'enroulement S/S (voir flèches S à la Fig. 1).

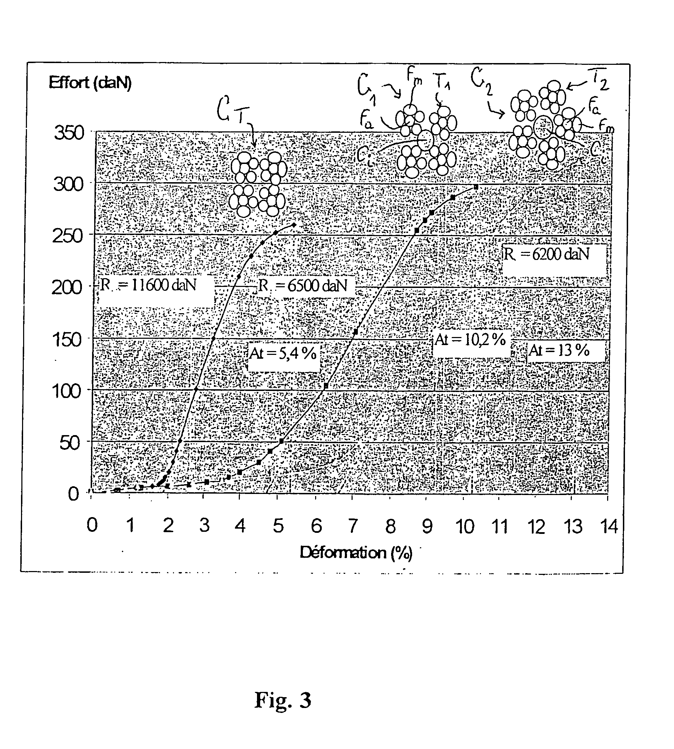

Une première variante selon l'invention de ce câble C (notée $C_1$) est représentée dans la partie supérieure du graphique de la Fig. 3, en regard de la courbe effort - déformation qui caractérise ce câble $C_1$.

Cette première variante est telle que chaque toron $T_1$ du câble $C_1$ comprend n-1 fils métalliques $f_m$ enroulés sur un fil d'âme $f_a$ selon un pas $p_e$'. Ce câble $C_1$ est conforme audit premier exemple de réalisation du cas (a) précité, étant de formule 1 + 4 x (1+5). Selon ce premier exemple, le câble $C_1$ comporte, d'une part, une couche interne $C_i$ constituée d'un monofilament écru de polyamide 6,6 (Nylon®, ténacité de 45 cN/tex et diamètre $d_i$ égal à 0,7 mm) et, d'autre part, N = 4 torons $T_1$ constitués chacun de n = 6 fils d'acier, lesquels comprennent un fil d'âme en acier $f_a$ sur lequel sont enroulés en hélice 5 autres fils d'acier $f_m$. Les 6 fils $f_m$, $f_a$ de chaque toron $T_1$ présentent un diamètre égal à 0,26 mm, et les pas $p_e$' et $p_i$ précités sont respectivement égaux à 5,5 et 10 mm dans les sens d'enroulement S/S.

Une seconde variante selon l'invention du câble C de la Fig. 1 (notée $C_2$) est également représentée dans la partie supérieure du graphique de la Fig. 3, en regard de la courbe effort - déformation qui caractérise ce câble $C_2$.

Cette seconde variante est également telle que chaque toron $T_2$ du câble $C_2$ comprend n-1 fils métalliques $f_m$ enroulés sur un fil d'âme $f_a$ selon un pas $p_e$'. Ce câble $C_2$ est conforme audit second exemple de réalisation du cas (a) précité, étant de formule 1 + 5 x (1+5). Selon ce second exemple, le câble $C_2$ comporte, d'une part, une couche interne $C_i$ constituée d'un monofilament encollé de polyamide 6,6 (Nylon®, ténacité de 45 cN/tex et diamètre $d_i$ égal à 1 mm) et, d'autre part, N = 5 torons $T_2$ constitués chacun de n = 6 fils d'acier, lesquels comprennent un fil d'âme en acier $f_a$

sur lequel sont enroulés en hélice 5 autres fils d'acier $f_m$. Les 6 fils $f_m$, $f_a$ de chaque toron $T_2$ présentent un diamètre égal à 0,26 mm, et les pas $p_e$' et $p_i$ précités sont respectivement égaux à 5,5 et 10 mm dans les sens d'enroulement S/S.

La Fig. 2 illustre un second mode de réalisation d'un câble hybride à couches C' selon l'invention, en référence au cas (b) susmentionné, dans lequel ladite couche externe est seulement en partie métallique.

Ce câble C' comporte également une couche interne $C_i$ non métallique formant âme et une couche externe $C_e$ insaturée comportant des torons T' au nombre de N' qui sont enroulés en hélice selon un pas $p_i$' sur la couche interne $C_i$, de diamètre $d_i$'.

On voit à la Fig. 2 que chaque toron T' comporte m fils métalliques $f_m$ de diamètre $d_e$' enroulés en hélice selon un pas $p_e$" sur un fil d'âme $f_a$' non métallique de diamètre $d_{fa}$. Selon l'invention, la couche interne $C_i$ et le fil d'âme $f_a$' sont constitués de matériaux identiques ou différents présentant chacun un allongement relatif à la rupture à 20° C qui est supérieur à 6 %.

Plus précisément, on voit dans l'exemple de réalisation de la Fig. 2 que ce câble C' selon l'invention répond à la formule 1 + 3 x (1+6), comportant N = 3 torons constitués chacun de 7 fils, lesquels comprennent le fil d'âme $f_a$' sur lequel sont enroulés en hélice m = 6 fils d'acier $f_m$. La couche interne $C_i$, de diamètre $d_i$' égal à 1 mm, et le fil d'âme $f_a$', de diamètre $d_{fa}$ égal à 0,6 mm, sont par exemple chacun constitués d'un monofilament de polyéthylène téréphtalate de type « regular ». Quant auxdits pas $p_e$" et $p_i$', ils sont par exemple respectivement égaux à 4,4 et 6,6 mm.

Dans ce qui suit, on va détailler les caractéristiques mécaniques de deux des câbles précités $C_1$ et $C_2$ selon l'invention, de formules 1 + 4 x (1+5) et 1 +5 x (1+5), respectivement, ainsi que d'un câble « témoin » $C_T$ de type à torons.

Ce câble « témoin » $C_T$ est représenté dans la partie supérieure du graphique de la Fig. 3, en regard de la courbe effort - déformation qui le caractérise, et on voit qu'il est constitué de 4 torons T" comportant 6 fils d'acier $f_m$' de diamètre égal à 0,26 mm (ce câble $C_T$ connu sous le nom de « 24.26 » est actuellement utilisé par la demanderesse dans les pneumatiques génie civil de dimensions « 40.00 R57 » qu'elle commercialise).

On a fait figurer à la Fig. 3 les valeurs de rigidité R (daN) et d'allongement relatif à la rupture At (%), pour chacun de ces câbles $C_T$, $C_1$, $C_2$.

On a par ailleurs réalisé quatre autres câbles $C_{2bis}$, $C_{2ter}$, $C_{2quater}$, $C_{2quinquies}$ selon l'invention (non représentés) constituant respectivement des variantes dudit câble $C_2$ de formule 1 + 5 x (1+5).

Dans le câble $C_{2bis}$, ladite couche interne $C_i$ est constituée d'un monofilament encollé de PET (diamètre $d_i$ égal à 1 mm), les 5 torons $T_2$ sont constitués chacun de 6 fils d'acier de diamètre égal à 0,26 mm, et les pas $p_e$' et $p_i$ précités sont respectivement égaux à 5,3 et 9,9 mm dans les sens d'enroulement S/S.

Dans le câble $C_{2ter}$, ladite couche interne $C_i$, de type multifilamentaire, est constituée de deux surtors de PET tordus ensemble, chaque surtors ayant un titre de 440 tex et étant obtenu par assemblage de deux filés de 220 tex chacun. Chacun des 5 torons $T_2$ est constitué de 6 fils d'acier de diamètre égal à 0,26 mm, et les pas $p_e$' et $p_i$ précités sont respectivement égaux à 5 et 9,4 mm dans les sens S/S.

Dans le câble $C_{2quater}$, ladite couche interne $C_i$, de type multifilamentaire, est constituée de deux surtors de PET tordus ensemble, chaque surtors ayant un titre de 440 tex et étant obtenu par assemblage de deux filés de 220 tex chacun. Chacun des 5 torons $T_2$ est constitué de 6 fils d'acier de diamètre égal à 0,26 mm, et les pas $p_e$' et $p_i$ précités sont respectivement égaux à 5,8 et 11,5 mm dans les sens S/S.

Dans le câble $C_{2quinquies}$, ladite couche interne $C_i$, de type multifilamentaire, est constituée de deux surtors de PET tordus ensemble, chaque surtors ayant un titre de 334 tex et étant obtenu par assemblage de deux filés de 167 tex chacun. Chacun des 5 torons $T_2$ est constitué de 6 fils d'acier de diamètre égal à 0,26 mm, et les pas $p_e$' et $p_i$ précités sont respectivement égaux à 5,2 et 9,5 mm dans les sens S/S.

Le tableau 1 ci-après détaille les caractéristiques mécaniques de chaque câble $C_T$, $C_1$, $C_2$, $C_{2bis}$, $C_{2ter}$, $C_{2quater}$, $C_{2quinquies}$, les mesures ayant été réalisées sur ces câbles pris isolément (i.e. avant leur incorporation dans le tissu composite).

Tableau 1 :

| | $C_T$ (24.26) | $C_1$ (25.26) âme Nylon® monofilament | $C_2$ (31.26) âme Nylon® monofilament | $C_{2bis}$ (31.26) âme PET monofilament | $C_{2ter}$ (31.26) âme PET multifilament | $C_{2quater}$ (31.26) âme PET multifilament | $C_{2qinquies}$ (31.26) âme PET multifilament |
|---|---|---|---|---|---|---|---|
| Diamètre total (mm) | 1,9 | 2,40 | 2,90 | 2,83 | 2,86 | 2,70 | 2,53 |
| Masse linéique (g/m) | 10,80 | 11,80 | 15,50 | 16,53 | 16,57 | 14,57 | 14,43 |
| Fm (N) | 2600 | 2960 | 3200 | 4069 | 3585 | 3222 | 3460 |
| Rigidité R (daN) | 11600 | 6500 | 6200 | 6360 | 11900 | 9150 | 5180 |
| As (%) | 1,9 | 4,3 | 6,6 | 9,5 | 9,5 | 6,7 | 8,0 |
| Ae (%) | 2,3 | 4,6 | 5 | 7,8 | 5,6 | 3,5 | 6,8 |
| Ap (%) | 1,2 | 1,1 | 1,4 | 0,5 | 0,9 | 0,3 | 0,9 |
| At (%) | 5,4 | 10,2 | 13,0 | 17,8 | 16,0 | 10,5 | 15,7 |

EP 1 520 069 B1

On a en outre vérifié que chacun des câbles selon l'invention à âme $C_i$ multifilamentaire $C_{2ter}$, $C_{2quater}$ et $C_{2quinquies}$ est tel que cette âme $C_i$ se situe en retrait de la couche externe formée par les torons $T_2$ dans la direction axiale du câble, contrairement aux câbles selon l'invention à âme $C_i$ monofilamentaire, tels que $C_{2bis}$, qui présentent un dépassement axial de cette âme $C_i$.

Il résulte de cette position de retrait axial de l'âme multifilamentaire que celle-ci n'est pas susceptible de fondre lors d'une opération de soudage électrique nécessaire à l'aboutage de deux câbles, ce qui signifie que les câbles selon l'invention à âme multifilamentaire ne sont pas susceptibles d'entraver cette opération de soudage.

Il résulte également de cette position de retrait axial une confection plus aisée des nappes de câbles « droit fil », du fait qu'il n'est pas nécessaire de couper les âmes dépassant axialement.

**Essais de roulage de pneumatiques dont les nappes sommet de protection sont renforcées par les câbles $C_1$ et $C_2$ de l'invention ou par le câble « témoin » $C_T$ :**

On a procédé à des essais de roulage de véhicules pourvus de pneumatiques génie civil de dimensions « 18.00R33 YP51 », dans un premier temps, sur un sol recouvert de cailloux coupants et, dans un second temps, sur un sol recouvert de cailloux plus arrondis, dans le but d'évaluer la résistance aux chocs et aux perforations des pneumatiques testés « témoin » $P_T$ et selon l'invention $P_1$ et $P_2$.

Les pneumatiques « témoin » $P_T$ comportent, dans chacune de leurs deux nappes sommet de protection NSP1 et NSP2, les câbles « témoin » $C_T$ précités (de formule « 24.26 »), selon une densité d de câbles par dm de tissu égale à 40 et selon une largeur $\Delta$L de « pont » de caoutchouc entre deux câbles adjacents égale à 0,6 mm (la distance entre les axes respectifs de deux câbles $C_T$ adjacents étant de 2,5 mm, pour un diamètre de câble $C_T$ de 1,9 mm).

Les premiers pneumatiques selon l'invention $P_1$ comportent, dans chacune de leurs deux nappes sommet de protection NSP1 et NSP2, les câbles selon l'invention $C_1$ précités (de formule 1 + 4 x (1+5)), selon une densité d égale à 31 et selon une largeur $\Delta$L de « pont » de caoutchouc égale à 0,8 mm (la distance entre les axes respectifs de deux câbles $C_1$ adjacents étant de 3,2 mm, pour un diamètre de câble $C_1$ de 2,4 mm).

Les seconds pneumatiques selon l'invention $P_2$ comportent, dans chacune de leurs deux nappes sommet de protection NSP1 et NSP2, les câbles selon l'invention $C_2$ précités (de formule 1 + 5 x (1+5)), selon une densité d égale à 28 et selon une largeur $\Delta$L de « pont » de caoutchouc égale à 0,6 mm (la distance entre les axes respectifs de deux câbles $C_2$ adjacents étant de 3,5 mm, pour un diamètre de câble $C_2$ de 2,9 mm).

Au bout d'un temps déterminé, on arrête le roulage puis on « décortique » les pneumatiques testés. On dénombre ensuite notamment, pour chaque pneumatique :

- le nombre de perforations dans la bande de roulement (notée « BdR » ci-après), puis dans les nappes sommet de protection radialement inférieures (NSP2 puis NSP1, radialement vers le bas), puis dans les nappes sommet de travail (NST2 et NST1, encore plus radialement vers le bas),
- le nombre de câbles cassés pour chaque nappe sommet NSP2, NSP1, NST2, NST1, et
- le nombre et les surfaces respectives des « poches de soufflage entre la nappe sommet de protection NSP2 et la sous-couche de bande de roulement (ces « poches » ou surfaces décollées sont dues notamment à la propagation des fissures dans le mélange radialement supérieur du pneumatique, et leur aire est évaluée en les assimilant à des ellipses).

Le tableau 2 ci-après détaille les résultats obtenus en valeurs relatives, en prenant comme référence les pneumatiques « témoin » $P_T$ pour lesquels les valeurs de nombre de perforations, de nombre de câbles cassés, de nombre et d'aire de « poches de soufflage » sont toutes exprimées en base 100. Pour les pneumatiques selon l'invention $P_1$ et $P_2$, les valeurs correspondantes sont rapportées à ces valeurs « témoin » (i.e. elles sont exprimées en pourcentages de celles-ci, étant respectivement inférieures ou supérieures à 100 si leurs valeurs absolues sont inférieures ou supérieures aux valeurs « témoin » absolues).

Tableau 2 :

| Pneus | Nombre de perforations | | | | | Nombre câbles cassés | | | | « poches de soufflage » | |
|---|---|---|---|---|---|---|---|---|---|---|---|
| | dans BdR | dans NSP2 | dans NSP1 | dans NST2 | dans NST1 | dans NSP2 | dans NSP1 | dans NST2 | dans NST1 | nombre | Aire S (mm$^2$) |
| $P_T$ | 100 | 100 | 100 | 100 | 100 | 100 | 100 | 100 | 100 | 100 | 100 |
| $P_1$ | 88 | 79 | 75 | 117 | 29 | 43 | 23 | 24 | 17 | 65 | 68 |

(suite)

| Pneus | Nombre de perforations | | | | | Nombre câbles cassés | | | | « poches de soufflage » | |
|---|---|---|---|---|---|---|---|---|---|---|---|
| | dans BdR | dans NSP2 | dans NSP1 | dans NST2 | dans NST1 | dans NSP2 | dans NSP1 | dans NST2 | dans NST1 | nombre | Aire S $(mm^2)$ |
| $P_2$ | 106 | 48 | 42 | 28 | 29 | 20 | 5 | 21 | 21 | 79 | 84 |

Ces résultats montrent notamment que les nappes sommet de protection NSP2 et NSP1 renforcées par des câbles hybrides à couches $C_1$ ou $C_2$ selon l'invention permettent de réduire sensiblement, d'une part, le nombre de câbles cassés dans chacune des nappes de l'armature de sommet et, d'autre part, le nombre et l'aire des « poches de soufflage » formées par décollement, par rapport aux nappes NSP1 et NSP2 renforcées par des câbles « témoin » $C_T$ à torons.

Ces résultats montrent également que les nappes NSP2 et NSP1 renforcées par ces câbles $C_1$ et $C_2$ permettent de réduire en moyenne le nombre de perforations entre la bande de roulement et les nappes sommet de travail.

On notera que ce sont les câbles $C_2$ selon l'invention qui conduisent aux meilleurs résultats de résistance aux chocs et aux perforations pour les pneumatiques les incorporant, tant pour ce qui est du nombre de perforations que du nombre de câbles cassés et de « poches de soufflage ».

## Revendications

1. Câble hybride à couches (C, C', $C_1$, $C_2$) notamment utilisable pour renforcer au moins une nappe sommet de protection d'une enveloppe de pneumatique poids-lourd ou génie civil, comportant une couche interne ($C_i$) non métallique formant âme et une couche externe ($C_e$) insaturée comportant des torons (T, T', $T_1$, $T_2$) qui sont chacun au moins en partie métalliques et qui sont enroulés en hélice sur ladite couche interne ($C_i$), **caractérisé en ce que** :

   o ladite couche interne ($C_i$) est constituée d'au moins un matériau non métallique présentant un allongement relatif à la rupture Ar, à 20° C, qui est supérieur à 6 % ;
   o chacun desdits torons (T, T', $T_1$, $T_2$), dont le nombre varie de 3 à 12, comporte au moins 3 fils ($f_m$, $f_a$, $f_a$') qui sont tous métalliques ou pas et qui sont enroulés en hélice selon un pas ($p_e$, $p_e$', $p_e$") égal ou inférieur au pas ($p_i$, $p_i$') d'enroulement desdits torons (T, T', $T_i$, $T_2$) sur ladite couche interne ($C_i$) ;
   o ledit câble (C, C', $C_1$, $C_2$) présente un allongement relatif à la rupture At, mesuré en traction selon la norme ISO 6892 de 1984, qui est supérieur à 7 %.

2. Câble hybride à couches (C, C', $C_1$, $C_2$) selon la revendication 1, **caractérisé en ce qu'**il présente un allongement relatif à la rupture At, mesuré en traction selon la norme ISO 6892 de 1984, qui est égal ou supérieur à 10 %.

3. Câble hybride à couches (C, C', $C_1$, $C_2$) selon la revendication 2, **caractérisé en ce qu'**il présente un allongement relatif à la rupture At, mesuré en traction selon la norme ISO 6892 de 1984, qui est égal ou supérieur à 12 %.

4. Câble hybride à couches (C, C', $C_1$, $C_2$) selon une des revendications 1 à 3, comportant ladite couche interne ($C_i$) de diamètre $d_i$, $d_i$' sur laquelle sont enroulés en hélice selon un pas $p_i$, $p_i$' lesdits torons (T, T', $T_1$, $T_2$) au nombre de N ou N', **caractérisé en ce que** chaque toron (T, T', $T_1$, $T_2$) comporte au choix :

   (a) soit n fils métalliques ($f_m$) de diamètre $d_e$ qui sont enroulés ensemble en hélice selon un pas $p_e$ ou bien qui comprennent n-1 fils ($f_m$) enroulés sur un fil d'âme ($f_a$) pour le toron (T, T', $T_1$, $T_2$) selon un pas $p_e$', ledit câble (C, $C_1$, $C_2$) vérifiant alors l'ensemble des conditions suivantes :

      (ai) ladite couche interne ($C_i$) est constituée d'au moins un matériau présentant un allongement relatif à la rupture Ar à 20° C qui est supérieur à 6 % ;
      (aii) $0{,}17 \leq d_e$ (en mm) $\leq 0{,}36$ ;
      (aiii) $1{,}1. d_e \leq d_i$ (en mm) $\leq 5. d_e$ ;
      (aiv) $3 \leq N \leq 12$ ;
      (av) $3 \leq n \leq 6$ ;
      (avi) $5. d_i \leq p_e$ (en mm) $\leq 20. d_i$ ou $5. d_i \leq p_e$'(en mm) $\leq 20. d_i$ ;
      (avii) $p_e \leq p_i$ (en mm) $\leq 3. p_e$ ou $p_e' \leq p_i$ (en mm) $\leq 3. p_e$';

**EP 1 520 069 B1**

(b) soit m fils métalliques ($f_m$) de diamètre $d_e$' enroulés en hélice selon un pas $p_e$" sur un fil d'âme non métallique ($f_a$') de diamètre $d_{fa}$, ledit câble (C') vérifiant alors l'ensemble des conditions suivantes :

(bi) ladite couche interne ($C_i$) et ledit fil d'âme ($f_a$') sont constitués de matériaux identiques ou différents présentant chacun un allongement relatif à la rupture Ar à 20° C supérieur à 6 % ;
(bii) 0, 17 $\leq d_e$'(en mm) $\leq$ 0,36 ;
(biii) 1,1. $d_e$'$\leq d_{fa}$ (en mm) $\leq$ 3. $d_e$';
(biv) 1,1. ($d_{fa}$ + 2. $d_e$') $\leq d_i$' $\leq$ 3. ($d_{fa}$ + 2. $d_e$') ;
(bv) 3 $\leq$ N' $\leq$ 12;
(bvi) 5 $\leq$ m $\leq$ 12 ;
(bvii) 10. $d_i$' $\leq p_e$" (en mm) $\leq$ 20. $d_i$' ;
(bviii) $p_e$" $\leq p_i$' (en mm) $\leq$ 3. $p_e$".

**5.** Câble hybride à couches (C, C', $C_1$, $C_2$) selon la revendication 4, **caractérisé en ce que** lesdites fils ($f_m$, $f_a$, $f_a$') de chaque toron (T, T', $T_1$, $T_2$) et lesdits torons (T, T', $T_1$, $T_2$) sont enroulés dans le même sens de torsion (S, S).

**6.** Câble hybride à couches (C, C', $C_1$, $C_2$) selon une des revendications 1 à 5, **caractérisé en ce que** ladite couche interne ($C_i$) formant âme est constituée d'un monofilament.

**7.** Câble hybride à couches (C, C', $C_1$, $C_2$) selon une des revendications 1 à 6, **caractérisé en ce que** ladite couche interne ($C_i$) formant âme est constituée d'un ou plusieurs filé(s) chacun à base d'une multitude de filaments élémentaires.

**8.** Câble hybride à couches (C, C', $C_1$, $C_2$) selon la revendication 7, **caractérisé en ce que** ladite couche interne ($C_i$) formant âme est constituée d'un ou plusieurs surtors qui sont chacun obtenus par assemblage de plusieurs filés.

**9.** Câble hybride à couches (C, C', $C_1$, $C_2$) selon une des revendications 1 à 8, **caractérisé en ce que** ladite couche interne ($C_i$) est constituée d'un polyamide aliphatique.

**10.** Câble hybride à couches (C, C', $C_1$, $C_2$) selon la revendication 9, **caractérisé en ce que** ladite couche interne ($C_i$) est constituée d'un polyamide 6,6.

**11.** Câble hybride à couches (C, C', $C_1$, $C_2$) selon une des revendications 1 à 8, **caractérisé en ce que** ladite couche interne ($C_i$) est constituée d'un polyester aliphatique.

**12.** Câble hybride à couches (C, C', $C_1$, $C_2$) selon la revendication 11, **caractérisé en ce que** ladite couche interne ($C_i$) est constituée d'un polyéthylène téréphtalate ou d'un polyéthylène naphtalate.

**13.** Câble hybride à couches (C, C', $C_1$, $C_2$) selon une des revendications 1 à 8, **caractérisé en ce que** ladite couche interne ($C_i$) est constituée de rayonne.

**14.** Câble hybride à couches (C') selon la revendication 4, **caractérisé en ce que**, dans ledit cas (b), ledit fil d'âme ($f_a$') pour chaque toron (T') est constitué d'un monofilament.

**15.** Câble hybride à couches (C') selon la revendication 14, **caractérisé en ce que** ledit fil d'âme ($f_a$') est constitué d'un polyamide aliphatique.

**16.** Câble hybride à couches (C') selon la revendication 15, **caractérisé en ce que** ledit fil d'âme ($f_a$') est constitué d'un polyamide 6,6.

**17.** Câble hybride à couches (C') selon la revendication 14, **caractérisé en ce que** ledit fil d'âme ($f_a$') est constitué d'un polyester aliphatique.

**18.** Câble hybride à couches (C') selon la revendication 17, **caractérisé en ce que** ledit fil d'âme ($f_a$') est constitué d'un polyéthylène téréphtalate ou d'un polyéthylène naphtalate.

**19.** Câble hybride à couches (C') selon la revendication 14, **caractérisé en ce que** ledit fil d'âme ($f_a$') est constitué de rayonne.

**20.** Câble hybride à couches (C, C', $C_1$, $C_2$) selon la revendication 4, **caractérisé en ce qu'**il vérifie en outre l'une ou l'autre des deux conditions suivantes :

(aviii) $1,5. p_e \leq p_i$ (en mm) $\leq 2. p_e$ ou $1,5. p_e' \leq p_i$ (en mm) $\leq 2. p_e'$ ;
(bix) $1,5. p_e'' \leq p_i'$ (en mm) $\leq 2. p_e''$.

**21.** Câble hybride à couches (C, C', $C_1$, $C_2$) selon la revendication 4 ou 20, **caractérisé en ce qu'**il vérifie en outre l'une ou l'autre des deux conditions suivantes :

(aix) $4 \leq p_e \leq p_i$ (en mm) $\leq 12$ ou $4 \leq p_e' \leq p_i$ (en mm) $\leq 12$;
(bx) $4 \leq p_e'' \leq p_i'$ (en mm) $\leq 12$.

**22.** Câble hybride à couches ($C_1$) selon une des revendications 1 à 21, **caractérisé en ce qu'**il comporte N = 4 torons ($T_1$) constitués chacun de n = 6 fils métalliques ($f_m$, $f_a$), lesquels comprennent un fil d'âme métallique ($f_a$) sur lequel sont enroulés en hélice 5 autres fils métalliques ($f_m$).

**23.** Câble hybride à couches ($C_2$) selon une des revendications 1 à 21, **caractérisé en ce qu'**il comporte N = 5 torons ($T_2$) constitués chacun de n = 6 fils métalliques ($f_m$, $f_a$), lesquels comprennent un fil d'âme métallique ($f_a$) sur lequel sont enroulés en hélice 5 autres fils métalliques ($f_m$).

**24.** Câble hybride à couches (C') selon une des revendications 1 à 21, **caractérisé en ce qu'**il comporte N = 3 torons (T') constitués chacun de 7 fils ($f_m$, $f_a'$), lesquels comprennent un fil d'âme non métallique ($f_a'$) sur lequel sont enroulés en hélice m = 6 fils métalliques ($f_m$).

**25.** Câble hybride à couches (C) selon une des revendications 1 à 21, **caractérisé en ce qu'**il comporte N = 7 torons (T) constitués chacun de n = 3 fils métalliques ($f_m$), lesquels sont enroulés ensemble en hélice.

**26.** Tissu composite utilisable comme nappe sommet de protection d'une enveloppe de pneumatique poids-lourd ou génie civil, comportant une composition de caoutchouc à base d'au moins un élastomère diénique qui est renforcée par des éléments de renforcement, **caractérisé en ce que** lesdits éléments de renforcement sont constitués de câbles (C', $C_1$, $C_2$) selon une des revendications 1 à 24.

**27.** Tissu composite selon la revendication 26, **caractérisé en ce que** ledit élastomère diénique appartient au groupe constitué par les polybutadiènes, le caoutchouc naturel, les polyisoprènes de synthèse, les copolymères de butadiène-styrène, les copolymères d'isoprène-butadiène, les copolymères d'isoprène-styrène et les copolymères de butadiène-styrène-isoprène.

**28.** Tissu composite selon la revendication 27, **caractérisé en ce que** ladite composition de caoutchouc est à base de caoutchouc naturel.

**29.** Tissu composite selon une des revendications 26 à 28, **caractérisé en ce que** ladite composition de caoutchouc présente, à l'état réticulé et mesuré selon la norme ASTM D 412, un module sécant M 10 compris entre 5 et 12 MPa.

**30.** Tissu composite selon une des revendications 26 à 29, **caractérisé en ce qu'**il comporte lesdits câbles (C', $C_1$, $C_2$) selon une densité de câbles qui est comprise entre 20 et 40 câbles par dm de tissu.

**31.** Tissu composite selon une des revendications 26 à 30, **caractérisé en ce que** la largeur ΔL du pont de composition de caoutchouc entre deux câbles adjacents (C', $C_1$, $C_2$) est comprise entre 0,5 et 1,3 mm.

**32.** Tissu composite selon la revendication 31, **caractérisé en ce que** ladite largeur ΔL est comprise entre 0,6 et 0,9 mm.

**33.** Tringle destinée à renforcer un bourrelet d'enveloppe de pneumatique pour véhicule léger à moteur, tel qu'une motocyclette, **caractérisée en ce qu'**elle comporte un câble (C) selon la revendication 25.

**34.** Enveloppe de pneumatique poids-lourd ou génie civil comportant une armature de carcasse qui est ancrée dans deux bourrelets et qui est surmontée radialement par une armature de sommet comportant, d'une part, une ou plusieurs nappes sommet de travail et, d'autre part, une ou plusieurs nappes sommet de protection surmontant ladite ou lesdites nappes sommet de travail, ladite armature de sommet étant elle-même surmontée d'une bande de roulement qui est réunie auxdits bourrelets par deux flancs, **caractérisée en ce que** l'une au moins desdites nappes sommet de protection comporte un tissu composite selon une des revendications 26 à 32.

35. Enveloppe de pneumatique pour véhicule léger à moteur, tel qu'une motocyclette, ledit pneumatique comportant une armature de carcasse qui est ancrée dans deux bourrelets, **caractérisée en ce que** chacun desdits bourrelets est renforcé par une tringle selon la revendication 33.

**Claims**

1. Hybrid layered cable (C, C', $C_1$, $C_2$) usable in particular to reinforce at least one crown protection ply of a tyre for a heavy vehicle or for earthmover, comprising a non-metallic internal layer ($C_i$) forming a core and an unsaturated external layer ($C_e$) comprising strands (T, T', $T_1$, $T_2$) each of which is at least partly metallic and which are wound in helix over the said internal layer ($C_i$), **characterised in that** :

   o the said internal layer ($C_i$) is composed of at least one non-metallic material having a relative elongation at break Ar at 20°C higher than 6%;
   o each of the said strands (T, T', $T_1$, $T_2$), whose number ranges from 3 to 12, comprises at least 3 filaments ($f_m$, $f_a$, $f_a$') which may or may not all be metallic and which are wound in helix of pitch ($p_e$, $p_e$', $p_e$") equal to or less than the winding pitch ($p_i$, $p_i$') of the said strands (T, T', $T_1$, $T_2$) over the said internal layer ($C_i$) ;
   o the said cable (C, C', $C_1$, $C_2$) has a relative elongation at break At, measured in traction in accordance with the standard ISO 6892 of 1984, which is higher than 7%.

2. Hybrid layered cable (C, C', $C_1$, $C_2$) according to Claim 1, **characterised in that** it has a relative elongation at break At, measured in traction in accordance with the standard ISO 6892 of 1984, which is equal to or higher than 10%.

3. Hybrid layered cable (C, C', $C_1$, $C_2$) according to Claim 2, **characterised in that** it has a relative elongation at break At, measured in traction in accordance with the standard ISO 6892 of 1984, which is equal to or higher than 12%.

4. Hybrid layered cable (C, C', $C_1$. $C_2$) according to any of Claims 1 to 3, comprising the said internal layer ($C_i$) of diameter $d_i$, $d_i$' around which are wound in helix of pitch $p_i$, $p_i$' the said strands (T, T', $T_1$, $T_2$), being N or N' in number, **characterised in that** each strand (T, T', $T_1$, $T_2$) comprises, as chosen:

   (a) either n metallic wires ($f_m$) of diameter $d_e$ twisted together in helix of pitch $p_e$, or comprising n - 1 wires ($f_m$) wound with pitch $p_e$' around a core wire ($f_a$) for the strand (T, T', $T_1$, $T_2$), the said cable (C, $C_1$, $C_2$) then satisfying all the following conditions:

      (ai) the said internal layer ($C_i$) is composed of a material having a relative elongation at break Ar at 20°C in excess of 6%;
      (aii) $0.17 \leq d_e$ (in mm) $\leq 0.36$ ;
      (aiii) $1.1. d_e \leq d_i$ (in mm) $\leq 5. d_e$ ;
      (aiv) $3 \leq N \leq 12$ ;
      (av) $3 \leq n \leq 6$;
      (avi) $5. d_i \leq p_e$ (in mm) $\leq 20. d_i$ or $5. d_i \leq p_e$' (in mm) $\leq 20. d_i$ ;
      (avii) $p_e \leq p_i$ (in mm) $\leq 3. p_e$ or $p_e$' $\leq p_i$ (in mm) $\leq 3. p_e$';

   (b) or m metallic wires ($f_m$) of diameter $d_e$' wound in helix of pitch $p_e$" around a non-metallic core filament ($f_a$") of diameter $d_{fa}$, the said cable (C') then satisfying all the following conditions:

      (bi) the said internal layer ($C_i$) is composed of identical or different materials each having a relative elongation at break Ar at 20°C in excess of 6%;
      (bii) $0.17 \leq d_e$' (in mm) $\leq 0.36$ ;
      (biii) $1.1. d_e$' $\leq d_{fa}$ (in mm) $\leq 3. d_e$' ;
      (biv) $1.1. (d_{fa} + 2. d_e$') $\leq d_i$' $\leq 3. (d_{fa} + 2. d_e$') ;
      (bv) $3 \leq N' \leq 12$ ;
      (bvi) $5 \leq m \leq 12$ ;
      (bvii) $10. d_i$' $\leq p_e$" (in mm) $\leq 20. d_i$' ;
      (bviii) $p_e$" $\leq p_i$' (in mm) $\leq 3. p_e$".

**5.** Hybrid layered cable (C, C', $C_1$, $C_2$) according to Claim 4, **characterised in that** the said filaments ($f_m$, $f_a$, $f_a$') of each strand (T, T', $T_1$, $T_2$) and the said strands (T, T', $T_1$, $T_2$) are wound in the same twist direction (S/S).

**6.** Hybrid layered cable (C, C', $C_1$, $C_2$) according to any of Claims 1 to 5, **characterised in that** the said internal layer ($C_i$) forming a core consists of a monofilament.

**7.** Hybrid cable (C, C', C1, C2) according to any of Claims 1 to 6, **characterised in that** the said internal layer ($C_i$) forming a core consists of one or more yarn(s) each based on a multitude of elementary filaments.

**8.** Hybrid layered cable (C, C', $C_1$, $C_2$) according to Claim 7, **characterised in that** the said internal layer ($C_i$) forming a core consists of one or more folded yarns each obtained by assembling several yarns.

**9.** Hybrid layered cable (C, C', $C_1$, $C_2$) according to any of Claims 1 to 8, **characterised in that** the said internal layer ($C_i$) is composed of an aliphatic polyamide.

**10.** Hybrid layered cable (C, C', $C_1$, $C_2$) according to Claim 9, **characterised in that** the said internal layer ($C_i$) is composed of a 6.6 polyamide.

**11.** Hybrid layered cable (C, C', $C_1$, $C_2$) according to any of Claims 1 to 8, **characterised in that** the said internal layer ($C_i$) is composed of an aliphatic polyester.

**12.** Hybrid layered cable (C, C', $C_1$, $C_2$) according to Claim 11, **characterised in that** the said internal layer ($C_i$) is composed of a polyethylene terephthalate or of a polyethylene naphthalate.

**13.** Hybrid layered cable (C, C', $C_1$, $C_2$) according to any of Claims 1 to 8, **characterised in that** the said internal layer ($C_i$) is composed of rayon.

**14.** Hybrid layered cable (C') according to Claim 4, **characterised in that** in the said case (b) the said core filament ($f_a$') for each strand (T') consists of a monofilament.

**15.** Hybrid layered cable (C') according to Claim 14, **characterised in that** the said core filament ($f_a$') is composed of an aliphatic polyamide.

**16.** Hybrid layered cable (C') according to Claim 15, **characterised in that** the said core filament ($f_a$') is composed of a 6.6 polyamide.

**17.** Hybrid layered cable (C') according to Claim 14, **characterised in that** the said core filament ($f_a$') is composed of an aliphatic polyester.

**18.** Hybrid layered cable (C') according to Claim 17, **characterised in that** the said core filament ($f_a$') is composed of a polyethylene terephthalate or a polyethylene naphthalate.

**19.** Hybrid layered cable (C') according to Claim 14, **characterised in that** the said core filament ($f_a$') is composed of rayon.

**20.** Hybrid layered cable (C, C', $C_1$, $C_2$) according to Claim 4, **characterised in that** it also satisfies one or other of the following two conditions:

(aviii) $1.5. \, p_e \leq p_i$ (in mm) $\leq 2. \, p_e$ or $1.5. \, p_e' \leq p_i$ (in mm) $\leq 2. \, p_e'$.
(bix) $1.5. \, p_e'' \leq p_i'$ (in mm) $\leq 2. \, p_e''$.

**21.** Hybrid layered cable (C, C', $C_1$, $C_2$) according to Claim 4 or 20, **characterised in that** it also satisfies one or other of the following two conditions:

(aix) $4 \leq p_e \leq p_i$ (in mm) $\leq 12$ or $4 \leq p_e' \leq p_i$ (in mm) $\leq 12$.
(bx) $4 \leq p_e'' \leq p_i'$ (in mm) $\leq 12$.

**22.** Hybrid layered cable ($C_1$) according to any of Claims 1 to 21, **characterised in that** it comprises N = 4 strands ($T_1$)

each consisting of n = 6 metallic wires ($f_m$, $f_a$), which include a core metallic wire ($f_a$) around which 5 other metallic wires ($f_m$) are wound in helix.

23. Hybrid layered cable ($C_2$) according to any of Claims 1 to 21, **characterised in that** it comprises N = 5 strands $T_1$ each consisting of n = 6 metallic wires ($f_m$, $f_a$), which include a core metallic wire ($f_a$) around which 5 other metallic wires ($f_m$) are wound in helix.

24. Hybrid layered cable (C') according to any of Claims 1 to 21, **characterised in that** it comprises N = 3 strands (T') each consisting of 7 filaments ($f_m$, $f_a'$) , which include a non-metallic core filament ($f_a'$) around which m = 6 metallic wires ($f_m$) are wound in helix.

25. Hybrid layered cable (C) according to any of Claims 1 to 21, **characterised in that** it comprises N = 7 strands (T) each consisting of n = 3 metallic wires ($f_m$) twisted together in helix.

26. Composite fabric usable as a crown protection ply of a tyre for a heavy vehicle or for earthmover, comprising a rubber composition based on at least one diene elastomer which is reinforced by reinforcing elements, **characterised in that** the said reinforcing elements consist of cables (C', $C_1$, $C_2$) according to any of Claims 1 to 24.

27. Composite fabric according to Claim 26, **characterised in that** the said diene elastomer belongs to the group consisting of the polybutadienes, natural rubber, the synthetic polyisoprenes, the copolymers of butadiene-styrene, the copolymers of isoprene-butadiene, the copolymers of isoprene-styrene and the copolymers of butadiene-styrene-isoprene.

28. Composite fabric according to Claim 27, **characterised in that** the said rubber composition is based on natural rubber.

29. Composite fabric according to any of Claims 26 to 28, **characterised in that** in the cross-linked state the secant modulus M10 of the said rubber composition, measured in accordance with the standard ASTM D 412, is between 5 and 12 MPa.

30. Composite fabric according to any of Claims 26 to 29, **characterised in that** it comprises the said cables (C', $C_1$, $C_2$) with a cable density between 20 and 40 cables per dm of fabric.

31. Composite fabric according to any of Claims 26 to 30, **characterised in that** the width $\Delta L$ of the bridge of rubber composition between two adjacent cables (C', $C_1$, $C_2$) is between 0.5 and 1.3 mm.

32. Composite fabric according to Claim 31, **characterised in that** the said width $\Delta L$ is between 0.6 and 0.9 mm.

33. Bead wire designed to reinforce a tyre bead of a tyre for a light motorised vehicle, such as a motorcycle, **characterised in that** it comprises a cable (C) according to Claim 25.

34. Tyre for a heavy vehicle or for earthmover, comprising a carcass reinforcement anchored in two beads and surmounted radially by a crown reinforcement comprising on the one hand one or more working crown plies, and on the other hand one or more crown protection plies surmounting the said working crown ply or plies, the said crown reinforcement being itself surmounted by a tread connected to the said beads by two sidewalls, **characterised in that** at least one of the said crown protection plies comprises a composite fabric according to any of Claims 26 to 32.

35. Tyre for a light motorised vehicle such as a motorcycle, the said tyre comprising a carcass reinforcement anchored in two beads, **characterised in that** each of the said beads is reinforced by a bead wire according to Claim 33.

**Patentansprüche**

1. Mehrlagiges Hybridseil (C, C' , $C_1$, $C_2$), das insbesondere zur Verstärkung von mindestens einer Schutzlauffläche eines Lastwagen- oder Tiefbau-Luftreifengehäuses verwendbar ist, umfassend eine nichtmetallische innere Lage ($C_1$), die eine Seele bildet, und eine ungesättigte äußere Lage ($C_e$), umfassend Litzen (T, T', $T_1$, $T_2$), die jeweils mindestens teilweise metallisch sind und die helixförmig auf die innere Lage ($C_i$) gewickelt sind, **dadurch gekennzeichnet, dass**:

- die innere Lage ($C_i$) aus mindestens einem nichtmetallischen Material besteht, das bei 20 °C eine Bruchdehnung Ar von mehr als 6 % aufweist;
- jede der Litzen (T, T', $T_1$, $T_2$), deren Zahl zwischen 3 und 12 variiert, mindestens 3 Fäden ($f_m$, $f_a$, $f_a$') umfasst, die alle metallisch sind oder nicht und die helixförmig nach einer Schlaglänge ($p_e$, $p_e$', $p_e$") gewickelt sind, welche kleiner als oder gleich groß wie die Schlaglänge ($p_i$, $p_i$') der Litzen (T, T', $T_1$, $T_2$) auf der inneren Lage ($C_i$) sind;
- das Seil (C, C', $C_1$, $C_2$) eine Bruchdehnung At aufweist, die, zugbelastet nach Norm ISO 6892 von 1984 gemessen, mehr als 7 % beträgt.

2. Mehrlagiges Hybridseil (C, C', $C_1$, $C_2$) nach Anspruch 1, **dadurch gekennzeichnet, dass** es eine Bruchdehnung At aufweist, die, zugbelastet nach Norm ISO 6892 von 1984 gemessen, größer als oder gleich 10 % ist.

3. Mehrlagiges Hybridseil (C, C', $C_1$, $C_2$) nach Anspruch 2, **dadurch gekennzeichnet, dass** es eine Bruchdehnung At aufweist, die, zugbelastet nach Norm ISO 6892 von 1984 gemessen, größer als oder gleich 12 % ist.

4. Mehrlagiges Hybridseil (C, C', $C_1$, $C_2$) nach einem der Ansprüche 1 bis 3, umfassend die innere Lage ($C_i$) mit Durchmesser $d_i$, $d_i$', auf die nach einer Schlaglänge $p_i$, $p_i$' die Litzen (T, T', $T_1$, $T_2$) mit der Zahl N oder N' helixförmig gewickelt sind, **dadurch gekennzeichnet, dass** jede Litze (T, T', $T_1$, $T_2$) wahlweise umfasst:

   (a) entweder n Metallfäden ($f_m$) mit Durchmesser $d_e$, die zusammen nach einer Schlaglänge $p_e$ helixförmig gewickelt sind, oder die n-1 Fäden ($f_m$) umfassen, die auf einen Seelenfaden ($f_a$) für die Litze (T, T', $T_1$, $T_2$) nach einer Schlaglänge $p_e$' gewickelt sind, wobei das Seil (C, $C_1$, $C_2$) somit alle der folgenden Bedingungen erfüllt:

   (ai) die innere Lage ($C_i$) besteht aus mindestens einem Material, das bei 20 °C eine Bruchdehnung Ar von mehr als 6 % aufweist;
   (aii) $0{,}17 \leq d_e$ (in mm) $\leq 0{,}36$;
   (aiii) $1{,}1 . d_e \leq d_i$ (in mm) $\leq 5 . d_e$;
   (aiv) $3 \leq N \leq 12$;
   (av) $3 \leq n \leq 6$;
   (avi) $5 . d_i \leq p_e$ (in mm) $\leq 20 . d_i$ oder $5 . d_i \leq p_e$'(in mm) $\leq 20 . d_i$;
   (avii) $p_e \leq p_i$ (in mm) $\leq 3 . p_e$ oder $p_e$' $\leq p_i$ (in mm) $\leq 3 . p_e$' ;

   (b) oder m Metallfäden ($f_m$) mit Durchmesser $d_e$', die nach einer Schlaglänge $p_e$" helixförmig auf einen nichtmetallischen Seelenfaden ($f_a$') mit Durchmesser $d_{fa}$ gewickelt sind, wobei das Seil (C') somit alle der folgenden Bedingungen erfüllt:

   (bi) die innere Lage ($C_i$) und der Seelenfaden ($f_a$') bestehen aus identischen oder unterschiedlichen Materialien, die jeweils bei 20 °C eine Bruchdehnung Ar von mehr als 6 % aufweisen;
   (bii) $0{,}17 \leq d_e$' (in mm) $\leq 0{,}36$;
   (biii) $1{,}1 . d_e$' $\leq d_{fa}$ (in mm) $\leq 3 . d_e$' ;
   (biv) $1{,}1 . (d_{fa} + 2 . d_e') \leq d_i$' $\leq 3 . (d_{fa} + 2 . d_e')$ ;
   (bv) $3 \leq N' \leq 12$;
   (bvi) $5 \leq m \leq 12$;
   (bvii) $10 . d_i$' $\leq p_e$" (in mm) $\leq 20 . d_i$' ;
   (bviii) $p_e$" $\leq p_i$' (in mm) $\leq 3 . p_e$".

5. Mehrlagiges Hybridseil (C, C', $C_1$, $C_2$) nach Anspruch 4, **dadurch gekennzeichnet, dass** die Fäden ($f_m$, $f_a$, $f_a$') jeder Litze (T, T', $T_1$, $T_2$) und die Litzen (T, T', $T_1$, $T_2$) in dieselbe Drehungsrichtung (S, S) gewickelt sind.

6. Mehrlagiges Hybridseil (C, C', $C_1$, $C_2$) nach einem der Ansprüche 1 bis 5, **dadurch gekennzeichnet, dass** die innere Lage ($C_i$), welche die Seele bildet, aus einem Monofilament besteht.

7. Mehrlagiges Hybridseil (C, C', $C_1$, $C_2$) nach einem der Ansprüche 1 bis 6, **dadurch gekennzeichnet, dass** die innere Lage ($C_i$), welche die Seele bildet, aus einem oder mehreren Garnen besteht, wobei jedes auf einer Vielzahl von Elementarfasern basiert.

8. Mehrlagiges Hybridseil (C, C', $C_1$, $C_2$) nach Anspruch 7, **dadurch gekennzeichnet, dass** die innere Lage ($C_i$), welche die Seele bildet, aus einem oder mehreren Überzwirnen besteht, die jeweils durch das Zusammenfügen mehrerer Garne erhalten werden.

9. Mehrlagiges Hybridseil (C, C', $C_1$, $C_2$) nach einem der Ansprüche 1 bis 8, **dadurch gekennzeichnet, dass** die innere Lage ($C_i$) aus einem aliphatischen Polyamid besteht.

10. Mehrlagiges Hybridseil (C, C', $C_1$, $C_2$) nach Anspruch 9, **dadurch gekennzeichnet, dass** die innere Lage ($C_i$) aus einem Polyamid 6,6 besteht.

11. Mehrlagiges Hybridseil (C, C', $C_1$, $C_2$) nach einem der Ansprüche 1 bis 8, **dadurch gekennzeichnet, dass** die innere Lage ($C_i$) aus einem aliphatischen Polyester besteht.

12. Mehrlagiges Hybridseil (C, C', $C_1$, $C_2$) nach Anspruch 11, **dadurch gekennzeichnet, dass** die innere Lage ($C_i$) aus einem Polyethylenterephthalat oder einem Polyethylennaphthalat besteht.

13. Mehrlagiges Hybridseil (C, C', $C_1$, $C_2$) nach einem der Ansprüche 1 bis 8, **dadurch gekennzeichnet, dass** die innere Lage ($C_i$) aus Rayon besteht.

14. Mehrlagiges Hybridseil (C') nach Anspruch 4,
**dadurch gekennzeichnet, dass** im Falle (b) der Seelenfaden ($f_a$') für jede Litze (T') aus einem Monofilament besteht.

15. Mehrlagiges Hybridseil (C') nach Anspruch 14, **dadurch gekennzeichnet, dass** der Seelenfaden ($f_a$') aus einem aliphatischen Polyamid besteht.

16. Mehrlagiges Hybridseil (C') nach Anspruch 15, **dadurch gekennzeichnet, dass** der Seelenfaden ($f_a$') aus einem Polyamid 6,6 besteht.

17. Mehrlagiges Hybridseil (C') nach Anspruch 14, **dadurch gekennzeichnet, dass** der Seelenfaden ($f_a$') aus einem aliphatischen Polyester besteht.

18. Mehrlagiges Hybridseil (C') nach Anspruch 17, **dadurch gekennzeichnet, dass** der Seelenfaden ($f_a$') aus einem Polyethylenterephthalat oder einem Polyethylennaphthalat besteht.

19. Mehrlagiges Hybridseil (C') nach Anspruch 14, **dadurch gekennzeichnet, dass** der Seelenfaden ($f_a$') aus Rayon besteht.

20. Mehrlagiges Hybridseil (C, C', $C_1$, $C_2$) nach Anspruch 4, **dadurch gekennzeichnet, dass** es außerdem die eine oder die andere der beiden folgenden Bedingungen erfüllt:

(aviii) 1,5. $p_e \leq p_i$ (in mm) $\leq$ 2. $p_e$ oder 1,5. $p_e$' $\leq p_i$ (in mm) $\leq$ 2. $p_e$' ;
(bix) 1, 5. $p_e$" $\leq p_i$' (in mm) $\leq$ 2. $p_e$".

21. Mehrlagiges Hybridseil (C, C', $C_1$, $C_2$) nach Anspruch 4 oder 20, **dadurch gekennzeichnet, dass** es außerdem die eine oder die andere der beiden folgenden Bedingungen erfüllt:

(aix) $4 \leq p_e \leq p_i$ (in mm) $\leq$ 12 oder $4 \leq p_e$' $\leq p_i$ (in mm) $\leq$ 12;
(bx) $4 \leq p_e$" $\leq p_i$' (in mm) $\leq$ 12.

22. Mehrlagiges Hybridseil ($C_1$) nach einem der Ansprüche 1 bis 21, **dadurch gekennzeichnet, dass** es N = 4 Litzen ($T_1$) umfasst, die jeweils aus n = 6 metallischen Fäden ($f_m$, $f_a$) bestehen, die einen metallischen Seelenfaden ($f_a$) umfassen, auf den 5 weitere metallische Fäden ($f_m$) helixförmig gewickelt sind.

23. Mehrlagiges Hybridseil ($C_2$) nach einem der Ansprüche 1 bis 21, **dadurch gekennzeichnet, dass** es N = 5 Litzen ($T_2$) umfasst, die jeweils aus n = 6 metallischen Fäden ($f_m$, $f_a$) bestehen, die einen metallischen Seelenfaden ($f_a$) umfassen, auf den 5 weitere metallische Fäden ($f_m$) helixförmig gewickelt sind.

24. Mehrlagiges Hybridseil (C') nach einem der Ansprüche 1 bis 21, **dadurch gekennzeichnet, dass** es N = 3 Litzen (T') umfasst, die jeweils aus 7 Fäden ($f_m$, $f_a$') bestehen, die einen nichtmetallischen Seelenfaden ($f_a$') umfassen, auf den m = 6 metallische Fäden ($f_m$) helixförmig gewickelt sind.

25. Mehrlagiges Hybridseil (C) nach einem der Ansprüche 1 bis 21, **dadurch gekennzeichnet, dass** es N = 7 Litzen (T) umfasst, die jeweils aus n = 3 metallischen Fäden ($f_m$) bestehen, die zusammen helixförmig gewickelt sind.

26. Verbundgewebe, das als Schutzlauffläche eines Lastwagen- oder Tiefbau-Luftreifengehäuses verwendbar ist, umfassend eine Kautschukzusammensetzung auf der Basis von mindestens einem Dienelastomer, die mit Verstärkungselementen verstärkt ist, **dadurch gekennzeichnet, dass** die Verstärkungselemente aus Seilen (C', $C_1$, $C_2$) nach einem der Ansprüche 1 bis 24 bestehen.

27. Verbundgewebe nach Anspruch 26, **dadurch gekennzeichnet, dass** das Dienelastomer zu der Gruppe, bestehend aus den Polybutadienen, Naturkautschuk, den Synthesepolyisoprenen, den Butadien-Styrol-Copolymeren, den Isopren-Butadien-Copolymeren, den Isopren-Styrol-Copolymeren und den Butadien-Styrol-Isopren-Copolymeren, gehört.

28. Verbundgewebe nach Anspruch 27, **dadurch gekennzeichnet, dass** die Kautschukzusammensetzung auf der Basis von natürlichem Kautschuk ist.

29. Verbundgewebe nach einem der Ansprüche 26 bis 28, **dadurch gekennzeichnet, dass** die Kautschukzusammensetzung im vernetzten Zustand und nach Norm ASTM D 412 gemessen ein Sekantenmodul M10 zwischen 5 und 12 MPa aufweist.

30. Verbundgewebe nach einem der Ansprüche 26 bis 29, **dadurch gekennzeichnet, dass** es die Seile (C', $C_1$, $C_2$) nach einer Seildichte zwischen 20 und 40 Seilen pro dm Gewebe umfasst.

31. Verbundgewebe nach einem der Ansprüche 26 bis 30, **dadurch gekennzeichnet, dass** die Breite $\Delta L$ der Brücke der Kautschukzusammensetzung zwischen zwei benachbarten Seilen (C', $C_1$, $C_2$) zwischen 0,5 und 1,3 mm liegt.

32. Verbundgewebe nach Anspruch 31, **dadurch gekennzeichnet, dass** die Breite $\Delta L$ zwischen 0,6 und 0,9 mm liegt.

33. Wulstkern zur Verstärkung eines Wulstes des Luftreifengehäuses für ein leichtes Motorfahrzeug wie etwa ein Motorrad, **dadurch gekennzeichnet, dass** er ein Seil (C) nach Anspruch 25 umfasst.

34. Lastwagen- oder Tiefbau-Luftreifengehäuse, umfassend einen Karkassenrahmen, der in zwei Wülsten verankert ist und über dem radial ein Kronenrahmen angebracht ist, der einerseits eine oder mehrere Arbeitslaufflächen und andererseits eine oder mehrere Schutzlaufflächen umfasst, welche über der oder den Arbeitslaufflächen angebracht ist/sind, wobei über dem Kronenrahmen selbst eine Reifenlauffläche angebracht ist, die über zwei Flanken mit den Wülsten verbunden ist, **dadurch gekennzeichnet, dass** mindestens eine der Schutzlaufflächen ein Verbundgewebe nach einem der Ansprüche 26 bis 32 umfasst.

35. Reifengehäuse für ein leichtes Motorfahrzeug, wie etwa ein Motorrad, wobei der Luftreifen einen Karkassenrahmen umfasst, der in zwei Wülsten verankert ist, **dadurch gekennzeichnet, dass** jeder der Wülste mittels eines Wulstkerns nach Anspruch 33 verstärkt ist.

Fig. 1

Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2080845 A
- US 3922841 A
- US 4158946 A
- US 4488587 A
- EP 168858 A
- EP 176139 A
- US 4651513 A
- EP 194011 A
- EP 260556 A
- US 4756151 A
- US 4781016 A
- EP 362570 A
- EP 497612 A
- US 5285836 A
- EP 567334 A
- US 5661965 A
- EP 568271 A
- EP 648891 A
- EP 661402 A

- US 5561974 A
- EP 669421 A
- US 5595057 A
- EP 675223 A
- EP 709236 A
- US 5836145 A
- EP 719889 A
- US 5697204 A
- EP 744490 A
- US 5806296 A
- EP 779390 A
- US 5802829 A
- EP 834613 A
- US 6102095 A
- WO 9841682 A
- US 4176705 A
- EP 1033435 A
- US 6007912 A